(19) Europäisches Patentamt
European Patent Office
Office européen des brevets

(11) **EP 2 713 008 A1**

(12) **EUROPEAN PATENT APPLICATION**

(43) Date of publication:
02.04.2014 Bulletin 2014/14

(51) Int Cl.:
*F01D 5/14* (2006.01)   *F01D 9/04* (2006.01)

(21) Application number: 13186326.8

(22) Date of filing: 27.09.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 01.10.2012 GB 201217482

(71) Applicant: Rolls-Royce plc
London SW1E 6AT (GB)

(72) Inventor: Auchoybur, Kiran
Derby, Derbyshire DE24 1AS (GB)

(74) Representative: Gee, Philip David et al
Rolls-Royce plc
Intellectual Property
SinB-38, PO Box 31
Derby
Derbyshire DE24 8BJ (GB)

(54) **Aerofoil for axial-flow machine with a cambered trailing edge**

(57)   An aerofoil, such as a vane, for an axial flow machine, the aerofoil having first (34) and second ends (36) and opposing pressure and suction surfaces extending between said first and second ends in a span-wise direction. A first portion of the span of the aerofoil towards the first end the aerofoil has a location of greatest camber which is closer to a trailing edge (40) than a leading edge (38) of the aerofoil. In a further portion of the aerofoil span the camber is either uniform between the leading (38) and trailing edges (40) or else a location of greatest camber is closer to the leading edge than the trailing edge. In the first portion of the span of the aerofoil the pressure and/or suction surface may turn to a greater extent towards the trailing edge than towards the leading edge of the aerofoil.

FIG. 3

**Description**

The present invention relates to aerofoils and rotor or stator assemblies of such aerofoils, typically for use in turbomachinery.

This invention is particularly concerned with improving the control of the fluid flow past one or more rows of such aerofoil members, which may be fixed vanes or may be blades rotating about the central axis of the duct. All aerofoils, whether in compressors or in turbines, use surface curvature to change the static pressure of the flow and thus provide lift. All such blade rows suffer from secondary flows that arise at the end walls of the blades increasing loss generation.

The asymmetry between the pressure and suction surface of an aerofoil (i.e. the aerofoil camber) produces lift. Blades and vanes in early compressors were designed with circular arc camber lines over the whole span of the blade such that the camber is evenly distributed along the entire chord. However the location of peak aerodynamic loading along the chord length caused by such a camber distribution has been found to result in high losses and a sub-optimal operating range for the flow through the compressor. Developments in subsonic aerofoil design have seen the camber distribution being pushed forward from the initial circular arc designs. Thus greater camber is provided in the leading portion of the blade than in the trailing portion.

Friction between the working fluid (typically air) and a solid surface, such as the aerofoil surface and/or the wall of a fluid passageway, creates a boundary layer of slower moving air. The faster air flowing between the aerofoils, outside the boundary layer, is in equilibrium with the pressure gradient caused by the aerofoils and is turned to the desired exit flow angle. However the boundary layer air passing between the aerofoils is more strongly influenced by the pressure gradient between the opposing surfaces of adjacent blades, such that it is turned to a greater degree than the primary air flow and rolls up into vortices, creating secondary flows that result in increased aerodynamic losses. (See, for example, Takeishi et al. (1989, "An Experimental Study of the Heat Transfer and Film Cooling on Low Aspect Ratio Turbine Nozzles", ASME Paper 89-GT-187).

In compressors, the problems associated with these secondary flows are exacerbated because generally compressor blade rows diffuse the flow. Because of this, typically the over-turned boundary layer may not simply roll up into a wake from the trailing edge of the blade, but additionally a region of separated flow can form in the corner between the aerofoil suction surface and the end wall. In parts of this separated region, the airflow may be reversed.

This corner separation is a source of significant losses, typically larger than the losses arising from "standard" secondary flows (such as in turbines). Corner separation may also cause significant blockage of the effective flow area. That is to say a portion of the available area of the flow passage is consumed by the vortices, thereby restricting the area available for the primary flow and reducing the mass flow delivered by the compressor.

As the pressure rise demanded of a compressor increases, it moves up its "characteristic". The aerofoils experience positive incidence and increased aerodynamic loading. Under these conditions the corner separation rapidly increases and may initiate stalling of the blade row. This behaviour may ultimately define the surge margin of the machine.

The front stages of compressors experience the most extreme off-design conditions (i.e. increased airflow incidence angles). If the pressure ratio of the compressor is large enough, variable stator vanes (VSVs) are required to mitigate the extreme incidence onto front stage rotors. The lower in speed the machine operates relative to design speed, the more the variable vanes are closed. However employing VSVs has drawbacks. Apart from the extra cost and weight of VSV's, additional complexity is introduced by the need to implement suitable control systems. Also re-distribution of mass flow impairs the effectiveness of variable vanes. Typically this leads to one set of endwalls being preferentially over-loaded aerodynamically.

Achieving surge margin requirements is of considerable importance for gas turbine engine compressors, and represents a particular problem at part speed where surge can initiate from the compressor endwall regions. One way of meeting challenging surge margin requirements at part speed is by modifying the VSV schedule. However this solution significantly reduces part speed efficiency and can lead to increased rotor noise (so-called "pseudo stall"). The surge margin of the compressor also becomes sensitive to VSV malschedule, which is not ideal.

Another known means of controlling corner separation is by three-dimensional leaning of the aerofoils. The application of "sweep" and "dihedral" leans (parallel and normal to the aerofoil chord line, respectively) can reduce the separation and flow reversal seen near to the end walls, and this improves the design point efficiency, compressor pressure ratio and surge margin of compressors.

However, there are drawbacks. The scope for leaning the aerofoils (particularly those in rotating blade rows) may be limited by mechanical constraints, especially stress. Even in stationary components (stators and vanes) where stress is not so important, manufacturing constraints may limit the three-dimensional shaping. Also, if the aerodynamic loading of the compressor and its blade rows is high enough, even the optimum leant aerofoil shape may not be enough to eliminate the corner separation.

An alternative means of controlling the flow regime are disclosed in patents US 6,283,713 and US 7,354,243 (both in the name of Rolls-Royce plc), which disclose a sinusoidally varying surface profile applied to the end wall of a turbomachinery blade row to create variations in the axial or circumferential direction. The static pressure distribution of the flow on the end wall is thus modified in order to control the secondary flow.

It is an aim of the present invention to provide an alternative means for mitigating the effects of aerofoil boundary layer separation in an axial flow machine. According to a first aspect of the invention there is provided an aerofoil for an axial flow machine, the aerofoil having first and second ends and opposing pressure and suction surfaces extending between said first and second ends in a span-wise direction, wherein in a first portion of the span of the aerofoil towards the first end the aerofoil has a location of greatest camber which is closer to a trailing edge than a leading edge of the aerofoil and wherein in a further portion of the aerofoil span the camber is either uniform between the leading and trailing edges or else a location of greatest camber is closer to the leading edge than the trailing edge.

According to a second aspect of the invention there is provided an aerofoil for an axial flow machine, the aerofoil having first and second ends and opposing pressure and suction surfaces extending between said first and second ends in a span direction, wherein in a first portion of the span of the aerofoil towards the first end the pressure and/or suction surface turns to a greater extent towards a trailing edge than towards a leading edge of the aerofoil and wherein in a further portion of the aerofoil the pressure and/or suction surface turns uniformly between the leading and trailing edges or else turns to a greater extent towards a leading edge.

The turning of the surfaces may be defined with respect to turning within a cross-sectional plane. For example a greater curvature (or smaller radius of curvature) of the pressure and/or suction surface in a cross-sectional plane may equate to a greater degree of turning. A smaller curvature (or greater radius of curvature) of the pressure and/or suction surface in a cross-sectional plane may equate to a smaller degree of turning.

In one embodiment the first portion is immediately adjacent the first end.

The first portion may encompass or extend between 1 and 50% of the span of the aerofoil. The first portion may encompass or extend between 1 and 30% of the span of the aerofoil. The first portion may encompass or extend between less than or approximately equal to 25% of the span of the aerofoil, such as between 5% and 20% of the aerofoil span or else between 10% and 20% of the span of the aerofoil.

The invention may otherwise be defined as the provision of an axial flow machine aerofoil having a rearwardly loaded camber distribution near the first end of the aerofoil. The provision of such an aerofoil, or array thereof, is beneficial in that the corner separation for a given level of aerodynamic loading can be reduced and/or the stable operating range of fixed rotor/stator endwall regions can be increased. This is contrary to the common understanding that it is beneficial to have a forwardly loaded camber distribution over the span of the blade in order to improve efficiency by minimizing losses associated with the primary flow (2D profile).

The further portion may be adjacent the first portion. The further portion of the aerofoil span may comprise the remainder of the span (i.e. the remainder of the blade between the first portion and the second end). For example the further portion may comprise between 50% and 90% of the aerofoil span, or, more typically, between 70% and 80% thereof.

The further portion may comprise a second portion which is adjacent the first portion. The second portion may have a uniform camber between the leading and trailing edges, or else a camber which is greatest a central location between the leading and trailing edges of the aerofoil. In the second portion the pressure and/or suction surfaces may turn uniformly between the leading and trailing edges or else may turn to a greatest extent (or at a greatest rate) at a central location between the leading and trailing edge.

The further portion may consist of or comprise of a third portion. The third portion may be spaced from the first portion by the second portion. A location of greatest camber in the third portion may be closer to the leading edge than the trailing edge. The pressure and/or suction surface in the third portion may turn to a greater extent towards the leading edge than towards the trailing edge.

The aerofoil may be arranged to depend from an end wall at the first end such that the aerofoil is upstanding therefrom in use. The aerofoil may be arranged to span an annular flow passage such that an end wall is provided at both the first and second ends thereof in use.

The aerofoil is typically arranged for subsonic flow speeds in use.

The first end may comprise a radially inner end of the aerofoil with respect to an axis of rotation of the axial flow machine. The location of greatest camber may tend towards the leading edge of the aerofoil with distance from the first end, for example within the first portion and/or further portion. Over the further portion of the aerofoil (such as a portion towards the second end or else a mid-span portion of the aerofoil), the location of greatest camber may be substantially constant.

Alternatively, over a portion of the aerofoil towards the second end, the location of greatest camber may again be closer to a trailing edge than a leading edge of the aerofoil (e.g. akin to the first portion towards the first end). Therefore a first portion may be provided at both of the first and second ends of the aerofoil, with the further portion located there-between.

That is to say the invention can, for example, be applied towards one or both ends of an aerofoil.

The present invention is particularly useful in that it can also be applied in conjunction with the further means for means reducing secondary flows as discussed above in the introduction.

According to a third aspect of the invention, there may be provided a rotor or stator aerofoil assembly for an axial flow machine comprising a plurality of aerofoils according to the first or second aspect arranged in an annular array about an axis. A row of rotor blades and/or stator vanes may be provided, wherein each blade or vane is according to the first or second aspect.

Each aerofoil in the array may have a pressure surface which faces a suction surface of an adjacent aerofoil.

The invention may reduce the three-dimensional flow (or separated boundary layer) interaction between the flow over the suction surface of one aerofoil and the flow over the pressure surface of an adjacent aerofoil. The present invention may improve the aerodynamic stability of an axial flow compressor or turbine.

The assembly may comprise end walls defining an annular flow passage, wherein the aerofoils extend across the flow passage between the end walls in a generally radial direction with respect to the axis. The axis is typically common to the rotor and stator and may comprise a longitudinal axis or axis of rotation for the assembly.

According to a fourth aspect of the invention there is provided a turbomachinery compressor or turbine, such as a gas turbine engine, comprising one or more blades according to the first or second aspect or else an assembly according to the third aspect. There may be provided a gas turbine engine having such a compressor or turbine.

Any of the preferable features defined in relation to any one aspect of the invention may be applied to any further aspect.

Practicable embodiments of the invention are described in further detail below by way of example only with reference to the accompanying drawings, of which:

Figure 1 shows a three-dimensional view of the flow over adjacent aerofoils according to the prior art;

Figure 2 shows a side view of an aerofoil according to the invention;

Figure 3 shows a cross section through a first portion of adjacent aerofoils according to one example of the invention;

Figure 4 shows a cross section through a further portion of an aerofoil of Figure 3;

Figure 5 shows a cross section through another portion of an aerofoil of Figure 3;

Figure 6a-c show plots of camber distribution for the cross sections of Figures 3, 4 and 5 respectively;

Figure 7 shows a three-dimensional view of computational fluid dynamics results of the flow over adjacent aerofoils for a uniform camber profile;

Figure 8 shows a three-dimensional view of computational fluid dynamics results of the flow over adjacent aerofoils for one example of an aerofoil assembly according to the invention;

Figure 9 shows a plot of lift distribution for a first portion of a compressor stator according to one example of the invention;

Figure 10 shows plots of loss coefficient against inlet whirl angle for the stator of Figure 9; and,

Figure 11 shows a longitudinal half-section of a gas turbine engine according to the invention.

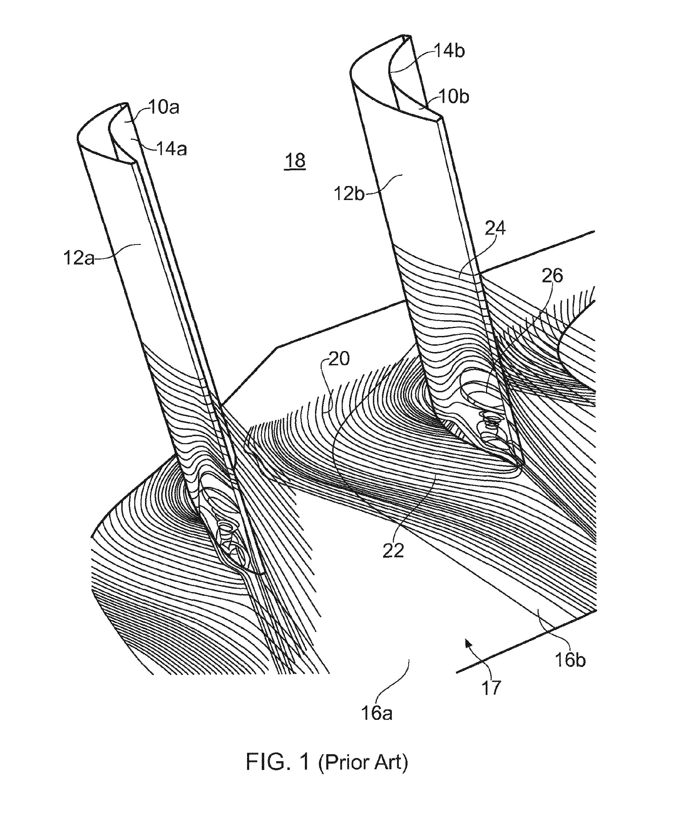

Figure 1 shows the results from a Computational Fluid Dynamics (CFD) simulation of the flow in a simple linear cascade of compressor blade rows. Two adjacent aerofoils (10a, 10b) are shown, each having a suction surface (respectively 12a, 12b) and a pressure surface (14a, 14b). A platform (16a, 16b) is associated with each aerofoil (10a, 10b), the platforms (16a, 16b) being radially inward of the aerofoils and together defining an end wall 17. A flow passage (18) is defined by the surfaces 14a, 17 and 12b and by a shroud surface (not shown) radially outward of the aerofoils (10a, 10b). The model is viewed from the rear (from downstream looking upstream). Streamlines show the flow patterns on the end wall (17) and on the aerofoil suction surface (12b) for the lower half of the passage). The incoming end wall boundary layer (20) approaches the leading edge at the design incidence.

The over-turning of the fluid at the bottom of the inlet boundary layer is visible in the streamlines (22). This causes the airflow to impinge onto the suction surface (12b) of the aerofoil. On the aerofoil, near mid-height, the flow lines are two-dimensional (24). However, nearer the end wall (17) the streamlines on the aerofoil are highly three-dimensional and clearly indicate the region of separated flow (26) (where some reverse flow can be seen).

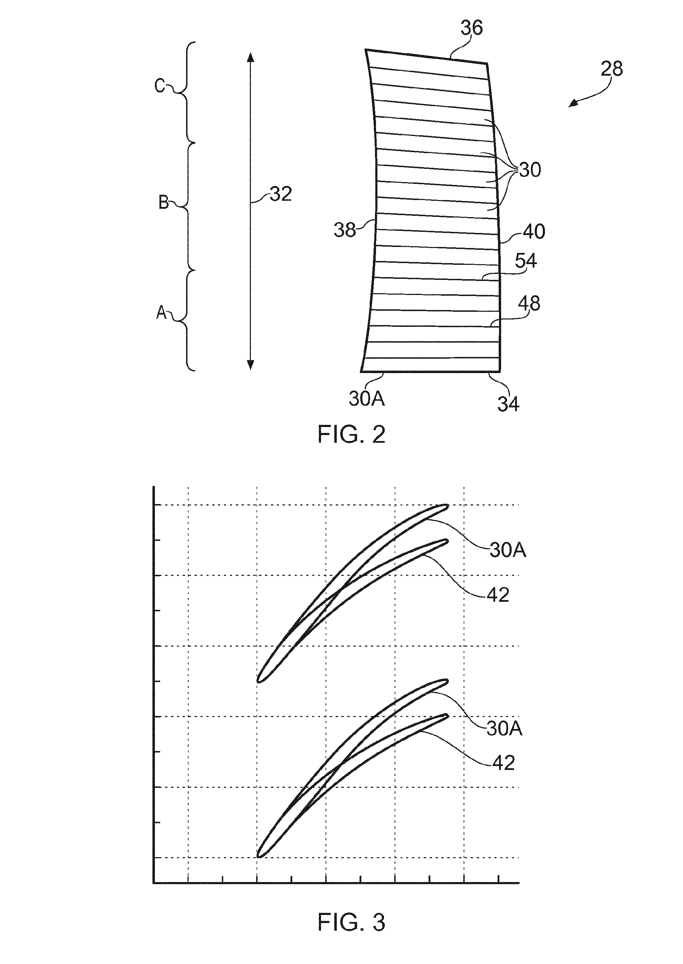

Turning now to Figure 2, there is shown an aerofoil in the form of a stator vane 28, to which the principles of the present invention are applied. A series of twenty-one sections 30 are equally spaced locations along the span 32 of the vane so as to define the overall geometry of the vane. Each section 30 typically lies along a streamline. However such sections may be referred to herein as cross-sections.

A radially inner portion of the vane A, which may be referred to as a hub region, extends from the hub end 34 of the vane approximately 25% of the way along the span of the vane. A mid-span region B occupies between 25%-75% of the span of the vane and represents a "free stream" region in which the flow over the vane is substantially two-dimensional (i.e. less affected by the end walls). A casing region C of the vane extends over the final quarter of the vane span (i.e. from 75%-100% of the span) in the vicinity of the radially outer end 36 of the vane.

The leading 38 and trailing 40 edges of the vane extend the full length of the span 32 and represent respective front and aft extremities of the vane in the direction of flow thereover in use.

Turning now to Figure 3 there is shown a section 30A taken at the hub end 34 of a pair of adjacent vanes 28 within a compressor. Each section 30A is juxtaposed against a section 42 through a vane having a circular arc camber line, indicative of uniform turning of the vane between its leading and trailing edges. In Figure 3 it can be seen that the vane 28 at its hub end turns less in the leading/front half of the vane. Accordingly the rate of turning of the vane increases to a maximal value in the rear/trailing half of the vane. Thus the angle through which the section 30A of the vane turns (i.e. its curvature) in the front half is lower than in the rear half.

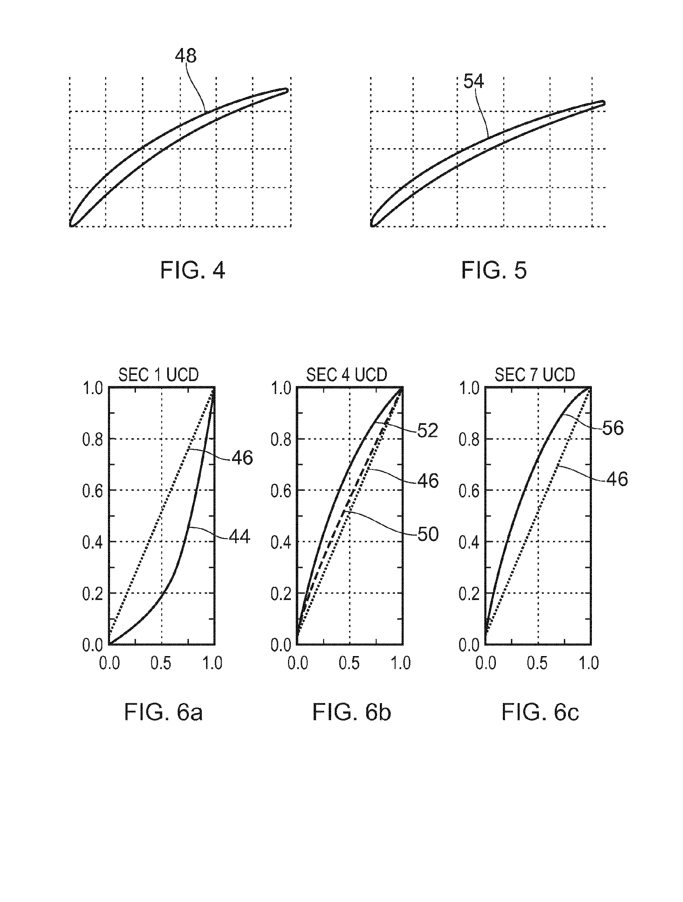

This aerofoil geometry can be further explained with reference to Figure 6a, which plots at line 44 the camber distribution (i.e. the change in camber against distance along the chord length) for section 30A. That camber distribution 44 is compared to a camber distribution for a circular arc (i.e. uniform camber) at line 46. It can be seen that the gradient of the line 44 is less than that of the line 46 towards the front half of the aerofoil (i.e. below a value of 0.5 on the Y-axis), being indicative of a lower camber, whereas the gradient of line 44 is greater than that of 46 in the rear half of the aerofoil. In this example only 20-25% of the camber (or blade turning) occurs in the front half of the blade in the cross-sectional plane. Approximately half of the camber is achieved at substantially 75% of the chord length.

Turning now to Figure 4, there is shown an aerofoil section 48 taken at the fourth of the sections 30 along the span of the vane 28. Figure 6b shows the camber profile for section 48 at line 50. For comparison, the camber distributions for a circular arc 46 and also a conventional forward-loaded vane camber profile 52 are shown. Here it can be seen that the camber profile 50 of the vane 28 is generally similar to that of the circular arc profile 46. However the profile 50 is slightly forwardly-loaded, such that by section 48 (i.e. at some point between the third and fourth sections along the vane span), the vane profile has passed through a uniform camber profile. Thus the location of uniform camber corresponds to a location of between 15% and 20% of the distance along the blade span in this embodiment.

The region where transition from rearward to forward-loaded camber style occurs on an aerofoil requires care. The ideal aerofoil would have healthy suction surface boundary layers across the entire span of the aerofoil akin to forward loaded aerofoils, with endwall boundary layer overturning occurring as late as possible in the passage. In practice, near the endwall, the suction surface boundary layer health has to be compromised to allow for the rearward loaded camber style. The key to the transition point is to minimise disruption to the suction surface boundary layers in the 2D region but yet still have sufficient influence over the endwall wall flow.

This transition point location may be varied for different blade or vane geometries but a suitable location is generally considered to lie between 10% and 30%, and, more typically, around 20-25% of span inboard from the endwalls. At such a location it has been found that the benefits of the delayed roll up of endwall boundary layer flow onto the suction surface outweighs the detriment of the resulting less healthy suction surface boundary layers. Transitioning too close to the endwalls would result in little gain, whereas transitioning too far inboard of the endwall could see a rise in loss and potentially a reduction in stable operating range due to the disruption caused to the boundary layers in the 2D region.

In Figure 5 there is shown a section 54 of the vane taken at the seventh of the aerofoil sections 30 shown in Figure 2. Figure 6c shows the camber plot 56 for this section, which is substantially equal to a forward-loaded aerofoil of this type according to the prior art (i.e. closer to the line 52 shown in Figure 6b). Further discussion of this camber distribution 52 will be omitted for brevity. However it is noted that any of the details of the camber distributions shown in any of Figures 6a-c may contribute to the definition of the invention.

A more-conventional forward-loaded camber distribution, as shown in Figures 5 and 6c is adopted over the remainder of the span of the aerofoil, i.e. for 20-75% of the span in this embodiment towards the radially outer end of the vane.

However in alternative embodiments it is possible to apply the rearward-loaded camber distribution at each end of the aerofoil such that a forward-loaded camber distribution at the central region is bounded at each end by a rearward-loaded camber distribution region, typically in the vicinity of the end walls. Each of those regions may be as described above. However it is not essential that those regions are identical. For example, if the boundary layer effects are reduced at the radially outer endwall, then the length of the rearward-loaded camber region at that end may be reduced. Furthermore the degree of rearward loading itself may be reduced. Alternatively a radially outer end of the aerofoil may not require a rearwardly-loaded camber distribution but may instead have only a circular arc camber profile or else a less-forwardly-loaded camber profile than the mid region of the aerofoil.

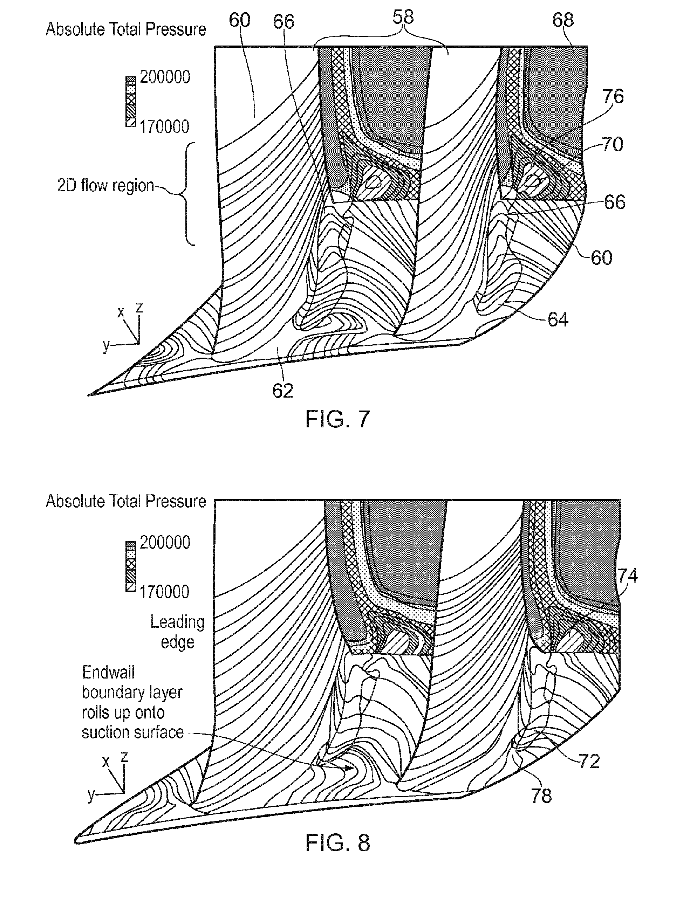

Turning now to Figures 7 and 8, there are shown 3D Computational Fluid Dynamics (CFD) flow visualisation for adjacent stator vanes of an intermediate pressure compressor of a gas turbine engine. Although the flow profile is different to that of Figure 1 corresponding sources of aerodynamic losses can be seen. Figure 7 shows a flow visualization for a pair of conventional vanes 58. The streamlines 60 on the aerofoil surface and on the end wall 62 show that the endwall boundary layer rolls up to form a vortex 64 which passes downstream, causing a wake region (shaded area 66) between the pressure and suction surfaces of the adjacent vanes.

Also shown in Figures 7 and 8 are corresponding contour plots of total pressure at an outlet plane of the stator row. The total pressure in the free stream between the two vanes at location 68 is approximately 200 kPa, whereas at its lowest value, in the region of the point 70, the boundary layer wake causes a drop in pressure to approximately 170 kPa.

Figure 8 shows the same CFD visualization for the vane described above in relation to Figures 2-6c. Here it can be seen that the modified vane has a smaller wake region 72, indicative of reduced corner separation. In this regard the wake region may be substantially halved in size. The minimum total pressure at the exit plane at location 74 of Fig. 8 is greater than that of Fig. 7 and is approximately equal to the pressure denoted by contour 76 in Fig. 7. Thus it can be seen that the area of separated flow in Fig. 8 is reduced in size. The area or volume by which the wake flow can be reduced may be in the region of 50% or more.

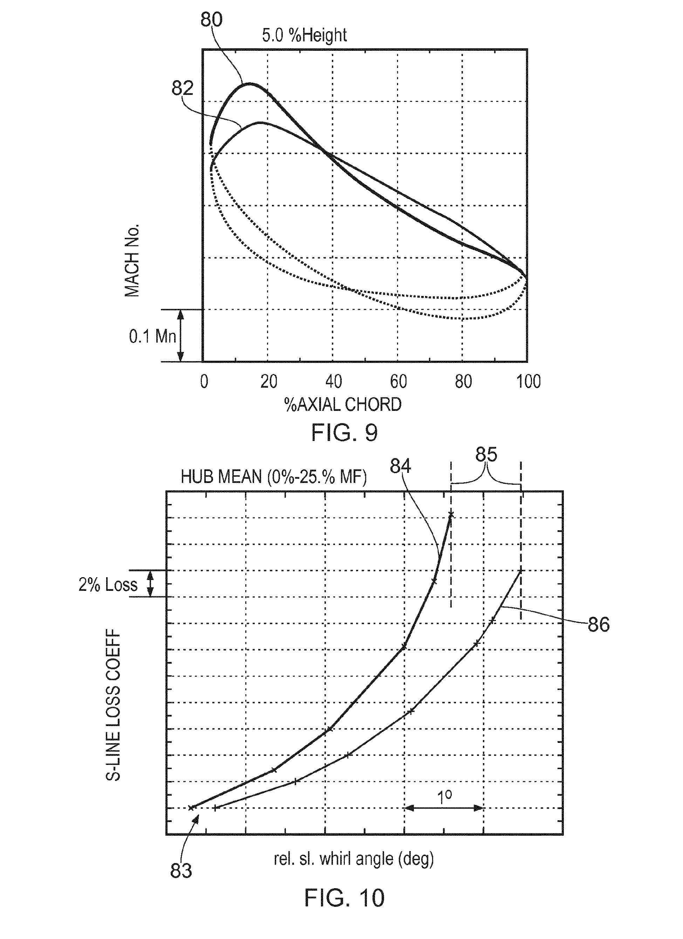

Furthermore the location 78 of the onset of separated flow is moved downstream along the suction surface of Fig. 8, when compared to location 64 in Fig. 7. All of the above described features of Fig. 8 will be understood by the skilled person to be aerodynamic improvements. Further quantification of the benefits of such revised vane geometry is given in Figures 9 and 10.

Figure 9 shows a comparison of the lift distributions taken from 3D CFD studies for a stator row 4 of a gas turbine engine intermediate pressure compressor in the vicinity of the hub end wall (e.g. at approximately 5% of the vane span). It is clear that the static pressure field near the hub has been significantly influenced by the local change in camber distribution. In particular the mach number of the flow of the conventional vane plot 80 peaks between 5-10% (approximately 8%) higher than the peak of the plot 82 for the vane proposed as an example of the invention. The peaks are also spaced along the axial chord lengths of the aerofoils such that the plot 82 peaks downstream of plot 80 at approximately 19% of the chord length. The plot 82 shows greater lift generated in the rear half of the vane than the plot 80.

Figure 10 shows the variation of aerodynamic loss (i.e. the Streamline loss coefficient) with change in inlet/whirl angle near the hub endwall. The loss coefficient in this example is defined as:

$$\text{loss coefficient} = \frac{P_{t_{EXIT}} - P_{t_{INLET}}}{P_{t_{INLET}} - P_{s_{INLET}}}$$

where $P_t$ is Total Pressure and $P_s$ is Static Pressure.

In this plot the mean values are taken in the 0-25% mass flow region from the end wall. As the compressor operates off-design for a given spool speed, the incidence onto the stator increases and loss rises. The design point is shown at 83. The conventional vane design plot is given at 84 whereas the modified design as described above is given at 86. The new design shows that the rate of increase in loss due to increasing incidence angle is reduced for this particular vane. It will be understood that as the loss coefficient tends to a vertical line, the flow becomes unstable and the associated stability limits 85 of each design have been marked. In this example, towards the right hand end of the plots 84 and 86, it can be seen approximately 1 degree extra stable operating range is achieved. If one degree of range is added to the endwall region of each row, this has the potential of increasing surge margin by approximately 5%.

The present invention is also beneficial in that it provides a further means for improving the stability of compressors, which can be used in conjunction with the any or any combination of existing techniques. That is to say the present invention may be applied to a blade or vane that is either swept and/or has a dihedral lean as described above.

The present invention can additionally or alternatively be used in conjunction with the stator hub terracing techniques disclosed in patents US 6,283,713 and US 7,354,243.

The present invention, whether used alone or in combination with the other techniques described above has the potential to increase range sufficiently in compressors to allow for a conventional VSV schedule to be adopted instead of a less-ideal, modified schedule. For example, by using the present invention, the VSV for a downstream (e.g. second) compressor stage may be controlled to close by less than that of the VSV of an upstream (e.g. first) compressor stage. For example VSV2 would preferably close by about half the amount of VSV1.

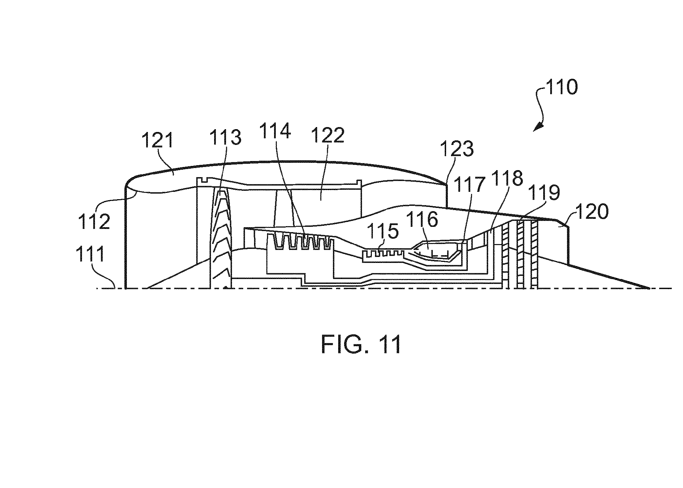

With reference to Figure 11, a ducted fan gas turbine engine is shown, in which the present invention may be applied. The engine, generally indicated at 110, has a principal and rotational axis 111. The engine 110 comprises, in axial flow series, an air intake 112, a propulsive fan 113, an intermediate pressure compressor 114, a high-pressure compressor 115, combustion equipment 116, a high-pressure turbine 117, and intermediate pressure turbine 118, a low-pressure turbine 119 and a core engine exhaust nozzle 120. A nacelle 121 generally surrounds the engine 110 and defines the intake 112, a bypass duct 122 and a bypass exhaust nozzle 123.

The gas turbine engine 110 works in a conventional manner so that air entering the intake 112 is accelerated by the fan 113 to produce two air flows: a first air flow into the intermediate pressure compressor 114 and a second air flow which passes through a bypass duct 122 to provide propulsive thrust. The intermediate pressure compressor 114 compresses the air flow directed into it before delivering that air to the high pressure compressor 115 where further compression takes place. The intermediate 114 and high 115 pressure compressors comprise an annular passageway defined by a hub end wall of the compressor rotor and a, radially outer casing end wall. The rotor blades depend outwardly across the passage from the rotor end wall and the stator vanes typically depend radially inwardly from the casing.

The compressed air exhausted from the high-pressure compressor 115 is directed into the combustion equipment 116 where it is mixed with fuel and the mixture combusted. The resultant hot combustion products then expand through, and thereby drive the high, intermediate and low-pressure turbines 117, 118, 119 before being exhausted through the nozzle 120 to provide additional propulsive thrust. The high, intermediate and low-pressure turbines 117, 118, 119 respectively drive the high and intermediate pressure compressors 115, 114 and the fan 113 by suitable interconnecting shafts.

Alternative gas turbine engine arrangements may comprise a two, as opposed to three, shaft arrangement and/or may provide for different bypass ratios. Other configurations known to the skilled person include open rotor designs, such as turboprop engines, or else turbojets, in which the bypass duct is removed such that all air flow passes through the core engine. The various available gas turbine engine configurations are typically adapted to suit an intended operation which may include aerospace, marine, power generation amongst other propulsion or industrial pumping applications.

This invention is best suited to high aspect ratio blading where it is possible to decouple the endwall pressure field from the mid-span. Accordingly the above described modifications to aerofoil profile may be applied to rotor blades or stator vanes in either of the IP or HP (114, 115) compressors. The present invention may also be applied to one or more turbine stages, such as the HP or IP turbine blades or vanes.

**Claims**

1. An aerofoil for an axial flow machine, the aerofoil having:

   first (34) and second (36) ends and
   opposing pressure and suction surfaces extending between said first and second ends in a span direction,
   wherein in a first portion of the span of the aerofoil towards the first end the aerofoil has a location of greatest camber which is closer to a trailing edge (40) than a leading edge (38) of the aerofoil
   and wherein in a further portion of the aerofoil span the camber is either uniform between the leading and trailing edges or else a location of greatest camber is closer to the leading edge than the trailing edge.

2. An aerofoil according to Claim 1, wherein the first portion is at or immediately adjacent the first end.

3. An aerofoil according to Claim 1 or 2, wherein the first portion comprises between 5% and 30% of the span of the aerofoil.

4. An aerofoil according to any preceding claim, wherein the further portion is adjacent the first portion and comprises a remainder of the aerofoil span.

5. An aerofoil according to any preceding claim, wherein the further portion comprises a second portion which is adjacent the first portion, the second portion having a uniform camber between the leading and trailing edges, or else a camber which is greatest at a central location between the leading and trailing edges.

6. An aerofoil according to Claim 5, wherein the further portion comprises a third portion, the third portion being spaced from the first portion by the second portion, wherein the location of greatest camber in the third portion is closer to the leading edge than the trailing edge.

7. An aerofoil according to Claim 6, wherein the location of greatest camber is substantially constant over the third portion of the aerofoil.

8. An aerofoil according to any one of Claims 1 to 6, wherein the location of greatest camber within the further portion tends towards the trailing edge of the blade in the vicinity of the second end of the aerofoil.

9. An aerofoil according to any preceding claim, wherein the location of greatest camber within the first portion tends towards the leading edge of the aerofoil with distance from the first end.

10. An aerofoil according to any preceding claim, wherein the opposing pressure and suction surfaces extend from an end wall (72) at the first end.

11. An aerofoil according to Claim 10 arranged to span an annular flow passage defined by the end wall at the first and an opposing end wall at the second end.

12. An aerofoil according to any preceding claim wherein the first end comprises a radially inner end or hub end with respect to an axis of rotation of the axial flow machine.

13. An aerofoil according to any preceding claim wherein the aerofoil is swept and/or leant in a dihedral direction between its first and second ends.

14. A rotor or stator aerofoil assembly for an axial flow machine comprising a plurality of aerofoils according to any one of claims 1 to 13 arranged in an annular array about an axis.

15. A gas turbine engine comprising a compressor having a plurality of rows of rotor blades in axial flow series and a plurality of rows of stator vanes therebetween, wherein the at least one row of blades and/or vanes comprises aerofoils in accordance with any one of Claims 1 to 13.

FIG. 1 (Prior Art)

FIG. 2

FIG. 3

FIG. 4

FIG. 5

FIG. 6a

FIG. 6b

FIG. 6c

Absolute Total Pressure

200000

170000

2D flow region

60  66                58              68

76

70

66

60

64

x z
y

62

FIG. 7

Absolute Total Pressure

200000

170000

Leading
edge

Endwall
boundary layer
rolls up onto
suction surface

74

72

x z
y

78

FIG. 8

FIG. 9

FIG. 10

FIG. 11

Europäisches
Patentamt

European
Patent Office

Office européen
des brevets

**EUROPEAN SEARCH REPORT**

Application Number

EP 13 18 6326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 359 341 A (ALSTOM POWER NV [NL]) 22 August 2001 (2001-08-22) * page 11, line 10 - line 14 * * figure 4 * | 1-15 | INV. F01D5/14 F01D9/04 |
| X | EP 1 106 836 A2 (GEN ELECTRIC [US]) 13 June 2001 (2001-06-13) * figure 2 * | 1-15 | |
| X | EP 2 133 573 A1 (SIEMENS AG [DE]) 16 December 2009 (2009-12-16) * paragraph [0029] * * paragraph [0030] * * figures 3,4 * | 1-15 | |
| X | CH 335 694 A (VICKERS ELECTRICAL CO LTD [GB]) 31 January 1959 (1959-01-31) * page 2, line 20 - line 25 * * figures 2,3 * | 1-15 | |
| X | EP 1 612 372 A1 (ALSTOM TECHNOLOGY LTD [CH]) 4 January 2006 (2006-01-04) * paragraph [0025] * * figure 2 * | 1-15 | TECHNICAL FIELDS SEARCHED (IPC) F01D F04D |
| X | JP 2003 227302 A (ISHIKAWAJIMA HARIMA HEAVY IND) 15 August 2003 (2003-08-15) * figure 1 * | 1-15 | |
| X | WO 2008/109036 A1 (XCELAERO CORP [US]) 12 September 2008 (2008-09-12) * figure 6A * | 1-15 | |

The present search report has been drawn up for all claims

| Place of search | Date of completion of the search | Examiner |
|---|---|---|
| Munich | 9 January 2014 | Rapenne, Lionel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 6326

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2014

| Patent document cited in search report | | Publication date | Patent family member(s) | | Publication date |
|---|---|---|---|---|---|
| GB 2359341 | A | 22-08-2001 | AT | 301767 T | 15-08-2005 |
| | | | AU | 3388901 A | 27-08-2001 |
| | | | DE | 60112551 D1 | 15-09-2005 |
| | | | DE | 60112551 T2 | 08-06-2006 |
| | | | EP | 1259711 A1 | 27-11-2002 |
| | | | ES | 2243448 T3 | 01-12-2005 |
| | | | GB | 2359341 A | 22-08-2001 |
| | | | JP | 2003522890 A | 29-07-2003 |
| | | | US | 2002197156 A1 | 26-12-2002 |
| | | | WO | 0161152 A1 | 23-08-2001 |
| EP 1106836 | A2 | 13-06-2001 | CA | 2326424 A1 | 06-06-2001 |
| | | | CN | 1299003 A | 13-06-2001 |
| | | | EP | 1106836 A2 | 13-06-2001 |
| | | | JP | 4771585 B2 | 14-09-2011 |
| | | | JP | 2001193692 A | 17-07-2001 |
| | | | KR | 20010062118 A | 07-07-2001 |
| | | | PL | 342227 A1 | 18-06-2001 |
| | | | RU | 2228461 C2 | 10-05-2004 |
| | | | US | 6331100 B1 | 18-12-2001 |
| EP 2133573 | A1 | 16-12-2009 | CA | 2727664 A1 | 17-12-2009 |
| | | | CN | 102066767 A | 18-05-2011 |
| | | | EP | 2133573 A1 | 16-12-2009 |
| | | | RU | 2011100793 A | 20-07-2012 |
| | | | US | 2011081252 A1 | 07-04-2011 |
| | | | WO | 2009149970 A1 | 17-12-2009 |
| CH 335694 | A | 31-01-1959 | NONE | | |
| EP 1612372 | A1 | 04-01-2006 | NONE | | |
| JP 2003227302 | A | 15-08-2003 | NONE | | |
| WO 2008109036 | A1 | 12-09-2008 | US | 2008226454 A1 | 18-09-2008 |
| | | | WO | 2008109036 A1 | 12-09-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6283713 B

- US 7354243 B

**Non-patent literature cited in the description**

- **TAKEISHI et al.** An Experimental Study of the Heat Transfer and Film Cooling on Low Aspect Ratio Turbine Nozzles. *ASME Paper 89-GT-187,* 1989